# EUROPEAN PATENT SPECIFICATION

(11) **EP 3 468 737 B1**
(45) Date of publication and mention of the grant of the patent: **05.11.2025**
(21) Application number: 17812846.8
(22) Date of filing: 12.06.2017
(51) Int. Cl.: B23F 19/12, B23G 9/00, B24B 19/00, B23F 1/02, B24B 19/02, B24B 21/00, B24B 21/02, B24B 21/18

(54) **AN APPARATUS FOR PERFORMING FINISHING OPERATION ON A BALL SCREW**
VORRICHTUNG ZUR DURCHFÜHRUNG EINER ENDBEARBEITUNG AN EINEM KUGELGEWINDETRIEB
APPAREIL DE RÉALISATION D'UNE OPÉRATION DE FINITION SUR UNE VIS À BILLES

(30) Priority: 13.06.2016 IN 201621020178
(43) Date of publication of application: 17.04.2019
(73) Proprietor: Grind Master Machines Pvt. Ltd., Aurangabad, Maharashtra 431005 (IN)
(72) Inventor: KELKAR, Milind Dinkar, Aurangabad, Maharashtra 431005 (IN)
(74) Representative: Bonini, Ercole
(86) International application number: PCT/IB2017/053455
(87) International publication number: WO 2017/216698

(56) References cited:
- EP-A1- 1 884 311
- EP-B1- 1 884 311
- WO-A1-2006/008258
- DE-A1- 102011 055 661
- JP-A- 2000 198 063
- JP-A- 2002 103 195
- US-A- 2 586 848
- US-A- 6 048 257
- US-A1- 2002 078 774
- US-A1- 2015 056 893
- US-A1- 2016 129 545

## Description

### FIELD

The present invention relates to field of manufacturing technology.

### DEFINITION

Shank portion - The expression "shank portion" used in the present disclosure refers to, but is not limited to, a stem or a shaft of an implement such as a ball screw or a nail or a pin.

### BACKGROUND

A ball screw is a mechanical linear actuator that converts rotational motion into linear motion with little friction. Conventionally, a ball screw includes a threaded shaft which provides a helical raceway for balls and functions as a precision screw. Ball screws are generally used in steering systems for automobiles and for motion transmission in machine tools.

During manufacturing, it is required that ball screws be machined with a super finishing operation after heat treatment. Conventional methods of performing a finishing operation on ball screws include manual/semi-automatic processes which are far from reliable because of the human intervention involved. An example of performing a finishing operation on ball screws includes polishing the ball screw manually using various abrasives, precision machining, grinding methods, and the like. While the conventional manual polishing has the limitation of less reliability and less accuracy, the precision machining or grinding methods are expensive and do not necessarily meet the surface finish requirements, especially Tp (Plateau Ratios) that is critical for maintaining a lubricating film on the surface.

There exists prior arts that teach conventional methods for finishing threads of a ball screw.

DE102011055661A1 teaches a device for producing outer ball screw on a workpiece. The device comprises a pair of grinding wheels arranged in such a way that the ball screw is formed in a single operation. However, DE102011055661A1 does not teach a feature that helps in finishing the threads of the ball screw.

WO2006008258 discloses a grinding wheel for producing external or internal ball threads on workpieces. The grinding wheel is equipped with a grinding element whose outer contour corresponds to a thread of the ball screw to be manufactured. Each element is provided with two stages, wherein one stage is used for pre-machining the workpiece and the other stage is used for finishing the workpiece. However, usage of the grinding wheel is time consuming and expensive as only a single thread can be manufactured and finished at a given instant of time.

JP2000198063A teaches a device for lapping thread groove of a nut. A threaded rod-shaped lap rod having a diameter smaller than a groove bottom diameter of a thread groove is inserted into the thread groove. A processing pressure applied between the nut and the lap rod allows lapping by rotating the lap rod. Then again, the device of JP2000198063A is used for lapping each ball screw thread individually, thereby increasing the cost and effort of manufacturing the ball screw.

JP2002103195 teaches a groove machining device which is configured to finish a groove. The device includes a tip face having a shape of a cross section of the groove. A lapping tape is supplied between the groove to be finished and the tip face. The lapping tape is pressed against the groove and the lapping process is performed. According to the teaching of JP2002103195, only one thread can be finished at one time, thereby making the process expensive.

US2586848 describes a belt sanding apparatus comprising a rotatably mounted disc for use in backing up or supporting sheet abrasives at the point where the workpiece being abraded contacts the abrasive coated side of the abrasive sheet during an abrading operation. US2586848 does not however teach finishing of ball screw threads.

US2015056893 teaches a method for polishing a ball screw by means of a polishing tape which is provided on a press roller. The press roller has to be moved over each thread, individually, to enable its finishing.

Accordingly, there exists a need to provide an assembly for performing a super finishing operation on ball screws which overcomes the abovementioned drawbacks.

### OBJECTS

Some of the objects of the present disclosure, which at least one embodiment herein satisfies, are as follows:
An object of the present invention is to provide an assembly comprising an apparatus for performing a super finishing operation on a ball screw surface with superior speed, reliability, and efficiency.

Another object of the present invention is to provide an assembly comprising an apparatus for performing a super finishing operation on a ball screw, which is simple and cost effective.

Other objects and advantages of the present invention will be more apparent from the following description, which is not intended to limit the scope of the present disclosure.

### SUMMARY

The present invention envisages an assembly comprising an apparatus for performing a finishing operation on the threads of a ball screw. The invention is set out in the appended set of claims, wherein the apparatus comprises a holder for holding the ball screw. The apparatus further comprises a replaceable finishing tool having threads complementary to the threads of the ball screw, and a drive mechanism for rotating the holder to facilitate angular displacement of the ball screw relative to the threads of the replaceable finishing tool to perform a finishing operation on the threads of the screw.

As defined in appended claim 1, the assembly further includes an abrasive belt received within the finishing tool such that the abrasive belt forms an interface between the section of threads of the finishing tool and the threads of the ball screw, wherein the angular displacement of the ball screw within the finishing tool facilitates a finishing operation of the ball screw via the finishing tool and the abrasive belt. In an embodiment, the abrasive belt is a non-woven abrasive belt.

As defined in appended claims 3 and 4, the assembly further includes a housing configured to hold the finishing tool. In an embodiment, the finishing tool and the housing are separate components which are assembled together. In another embodiment, the housing and the finishing tool are manufactured as an integral component.

### BRIEF DESCRIPTION OF THE ACCOMPANYING DRAWING

An assembly comprising an apparatus for performing a finishing operation on a ball screw of the present disclosure will now be described with the help of the accompanying drawing, in which:
- Fig. 1A illustrates a schematic view of the apparatus for performing a finishing operation on a ball screw, in accordance with an embodiment of the present disclosure;
- Fig. 1B illustrates isometric view of the assembly comprising the apparatus for performing a finishing operation on a ball screw, in accordance with an embodiment of the present disclosure;
- Fig. 2 illustrates an isometric view of a finishing tool used in the apparatus of Fig. 1A; and
- Fig. 3 illustrates a motion of a ball screw and its arrangement during a super finishing operation performed using the apparatus of Fig. 1A.

### LIST OF REFERENCE NUMERALS

10 - Finishing tool
10A - Tooling portion
20 - Abrasive belt
30 - Housing
40 - Ball screw
40A - Threads
40B - Shank portion
42 - Holder
44 - Drive mechanism
100 - Ball screw superfinishing apparatus
1000 - Assembly comprising ball screw apparatus and abrasive belt.

### DETAILED DESCRIPTION

At the manufacturing stage of a ball screw, it is required that the ball screw be machined with a super finishing operation after the heat treatment. The conventional methods of performing a finishing operation on the ball screws include manual/semi-automatic processes which are far from reliable because of the human intervention involved. An example of performing a finishing operation on the ball screws includes polishing the ball screw manually using various abrasives, precision machining, grinding methods, and the like. While the conventional manual polishing has the limitation of less reliability and less accuracy, the precision machining or grinding methods are expensive and do not necessarily meet the surface finish requirements, especially Tp (Plateau Ratios) critical for maintaining a lubricating film on the surface.

To overcome the aforementioned drawbacks, the present disclosure envisages an assembly comprising an apparatus for performing a finishing operation on a ball screw which does not rely on human intervention by a human operator. Also, the assembly disclosed in the present disclosure does not involve the use of expensive components like precision machines or grinding machines.

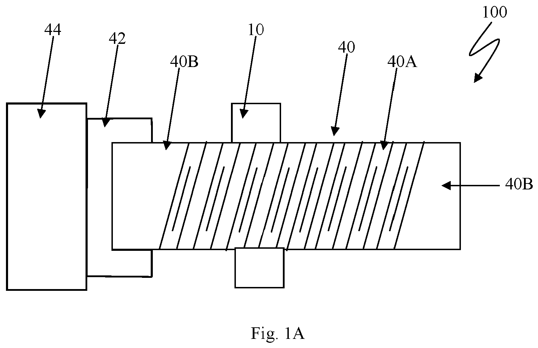

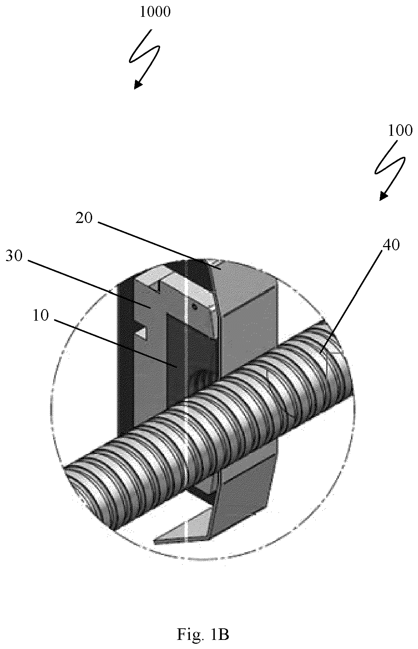

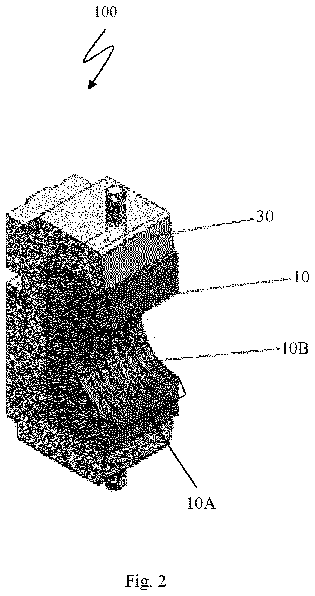

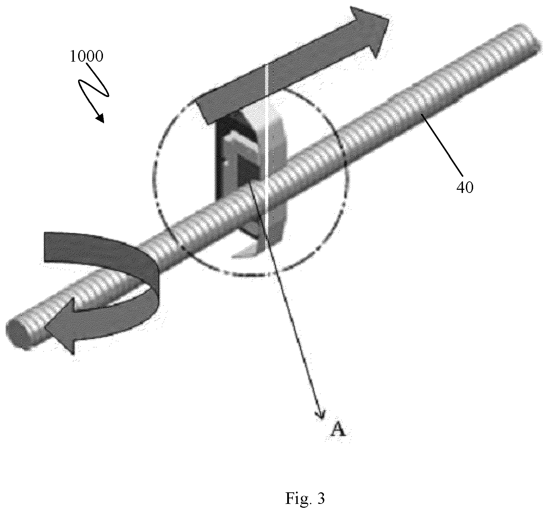

The apparatus of the present disclosure is hereinafter described with reference to Fig. 1A through Fig. 3. Fig. 1B illustrates isometric view of an assembly comprising an apparatus **100** for performing a finishing operation on a ball screw **40,** in accordance with an embodiment of the present disclosure. Fig. 2 illustrates an isometric view of a finishing tool **10** used in the apparatus **100.** Fig. 3 illustrates a motion of the ball screw **40** and its arrangement during a super finishing operation performed using the assembly 1000**.**

The present invention envisages an assembly 1000 comprising an apparatus **100** for performing a finishing operation on threads **40A** on a ball screw **40.** The apparatus **100** comprises a holder **42** for holding the ball screw **40,** a replaceable finishing tool **10** having a section of threads **10B** complementary to the threads **40A** of the ball screw **40,** and a drive mechanism **44** for rotating the holder **42** to facilitate angular displacement of the ball screw **40** relative to the section of threads **10B** of the replaceable finishing tool **10** to perform a finishing operation on the threads **40A** of the ball screw **40.**

According to the present invention, the assembly 1000 further comprises an abrasive belt **20** that is received within the finishing tool **10** such that the abrasive belt **20** forms an interface between the section of threads of the finishing tool **10** and the threads of the ball screw **40,** wherein an angular displacement of the ball screw **40** within the finishing tool **10** facilitates the finishing/super-finishing operation of the ball screw **40** via the finishing tool **10** and the abrasive belt **20.** In an embodiment, the abrasive belt **20** is a non-woven abrasive belt.

In an embodiment, the assembly **1000** further comprises a housing **30** wherein the finishing tool **10** supported within the housing **30.** In an embodiment, the housing **30** and the finishing tool **10** are separate components which are assembled together by means of fasteners or rib-slot arrangements. In another embodiment, the housing **30** and the finishing tool **10** are manufactured as an integral component.

The finishing tool **10** has a tooling portion **10A** defined by an inner periphery of a circular slot configured on the finishing tool **10.** The tooling portion **10A** is provided with the section of threads **10B** complementary with the thread formations configured on the ball screw **40.** The abrasive belt **20** is received within the tooling portion **10A** such that the abrasive belt **20** forms the interface between the tooling portion **10A** and the ball screw **40,** wherein a rotation of the ball screw **40** within the tooling portion **10A** facilitates the finishing/superfinishing operation of the ball screw **40** via the tooling portion **10A** and the abrasive belt **20.**

Referring to Fig. 1A through Fig. 3, there is shown the apparatus **100** which is described in more detail hereinafter. The apparatus **100** comprises the finishing tool **10** which is a screw based contact tool and the unwoven abrasive belt **20.** The finishing tool **10** is configured within the housing **30.** The housing **30** holds the finishing tool **10** firmly therein. In an embodiment, the housing **30** and the finishing tool **10** are manufactured as an integral unit.

The finishing tool **10** is a specially made screw type tool which helps follow the ball screw **40** profile. In an embodiment, the finishing tool **10** includes a section of inward threads **10B** configured thereon that correspond to the threads and grooves of the ball screw **40** to be super-finished. Specifically, the section of inward threads **10B** facilitate the holding of the ball screw **40** therein during the super finishing operation being performed on the ball screw **40.**

In an operative configuration, the ball screw **40** is rotated by the holder **42** that is coupled with a drive mechanism **44.** In an embodiment, the holder **42** is a head stock of a lathe machine which is given a rotary drive, as seen in Fig. 3. In another embodiment, the holder **42** is configured on a motor that is the drive mechanism **44.** The rotation of the ball screw **40** causes engagement of the ball screw **40,** the unwoven abrasive belt **20,** and the finishing tool **10** by applying pressure on the apparatus **100.** The engagement and rotation of the ball screw **40** with the tooling portion **10A** gives a traversing motion to the finishing tool **10.** The ball screw **40** is angularly displaced clockwise and counterclockwise alternately, in an operative configuration of the finishing tool **10** to give forward and reverse strokes to the finishing tool **10.**

### TECHNICAL ADVANCEMENTS

The present disclosure described herein above has several technical advantages including, but not limited to, the realization of an assembly comprising an apparatus for performing super finishing operation on a ball screw, which:
- operates with superior speed, reliability, and efficiency; and
- is simple and cost effective.

## Claims

1. An assembly (1000) comprising:
i. an apparatus (100) for performing finishing operation on the threads (40A) on a ball screw (40), said apparatus (100) comprising:
- a holder (42) for holding said ball screw (40),
and being **characterized by**
- a replaceable finishing tool (10) having a tooling portion (10A) defining a section of threads (10B) complementary to said threads (40A) of said ball screw (40); and
- a drive mechanism (44) for angularly displacing said holder (42) to facilitate the angular displacement of said ball screw (40) relative to said section of threads (10B) of said replaceable finishing tool (10) to perform a finishing operation on said threads (40A) of said ball screw (40); and
ii. an abrasive belt (20) configured to be received within said finishing tool (10) such that, when said abrasive belt (20) is received within said finishing tool (10), it forms an interface between said section of threads (10B) of said finishing tool (10) and the threads (40A) of said ball screw (40), such that the angular displacement of said ball screw (40) relative to said section of threads (10B) of said finishing tool (10) facilitates a finishing operation of the threads (40A) of said ball screw (40) via said finishing tool (10) and said abrasive belt (20).

2. The assembly (1000) as claimed in claim 1, wherein said abrasive belt (20) is a non-woven abrasive belt.

3. The assembly (1000) as claimed in claim 1, which includes a housing (30) configured to hold said finishing tool (10).

4. The assembly (1000) as claimed in claim 3, wherein said finishing tool (10) and said housing (30) are separate components which are assembled together.

5. The assembly (1000) as claimed in claim 3, wherein said housing (30) and said finishing tool (10) are manufactured as an integral component.

6. The assembly (1000) as claimed in claim 1, wherein said drive mechanism (44) is configured to facilitate the alternate clockwise and counterclockwise angular displacement of the ball screw (40) within the tooling portion (10A), to give the finishing tool (10) a traversing reciprocal motion in forward and reverse strokes to perform the finishing operation on the threads (40A) of the ball screw (40).

## Patentansprüche

1. Anordnung (1000), umfassend:
i. eine Vorrichtung (100) zum Durchführen eines Endbearbeitungsvorgangs auf den Gewinden (40A) auf einer Kugelumlaufspindel (40), wobei die Vorrichtung (100) Folgendes umfasst:
- einen Halter (42) zum Halten der Kugelumlaufspindel (40),
und **gekennzeichnet durch**
- ein austauschbares Endbearbeitungswerkzeug (10) mit einem Werkzeugabschnitt (10A), der eine Gewindesektion (10B) definiert, die zu den Gewinden (40A) der Kugelumlaufspindel (40) komplementär ist; und
- einen Antriebsmechanismus (44) zum winkelmäßigen Verschieben des Halters (42), um die winkelmäßige Verschiebung der Kugelumlaufspindel (40) relativ zu der Gewindesektion (10B) des austauschbaren Endbearbeitungswerkzeugs (10) zu erleichtern, sodass ein Endbearbeitungsvorgang auf den Gewinden (40A) der Kugelumlaufspindel (40) durchgeführt wird; und
ii. ein Schleifband (20), das so konfiguriert ist, dass es in dem Endbearbeitungswerkzeug (10) aufgenommen werden kann, sodass es, wenn das Schleifband (20) in dem Endbearbeitungswerkzeug (10) aufgenommen ist, eine Schnittstelle zwischen der Gewindesektion (10B) des Endbearbeitungswerkzeugs (10) und den Gewinden (40A) der Kugelumlaufspindel (40) bildet, so dass die winkelmäßige Verschiebung der Kugelumlaufspindel (40) relativ zu der Gewindesektion (10B) des Endbearbeitungswerkzeugs (10) einen Endbearbeitungsvorgang der Gewinden (40A) der Kugelumlaufspindel (40) mittels des Endbearbeitungswerkzeugs (10) und des Schleifbandes (20) erleichtert.

2. Anordnung (1000) nach Anspruch 1, wobei das Schleifband (20) ein Vlies-Schleifband ist.

3. Anordnung (1000) nach Anspruch 1, die ein Gehäuse (30) umfasst, das so konfiguriert ist, dass es das Endbearbeitungswerkzeug (10) hält.

4. Anordnung (1000) nach Anspruch 3, wobei das Endbearbeitungswerkzeug (10) und das Gehäuse (30) separate Komponenten sind, die miteinander zusammengebaut sind.

5. Anordnung (1000) nach Anspruch 3, wobei das Gehäuse (30) und das Endbearbeitungswerkzeug (10) als eine integrale Komponente hergestellt sind.

6. Anordnung (1000) nach Anspruch 1, wobei der Antriebsmechanismus (44) so konfiguriert ist, dass er die alternierende winkelmäßige Verschiebung der Kugelumlaufspindel (40) innerhalb des Werkzeugabschnitts (10A) im Uhrzeigersinn und gegen den Uhrzeigersinn erleichtert, um dem Endbearbeitungswerkzeug (10) eine hin- und hergehende Bewegung in Vorwärts- und Rückwärtshüben zu verleihen, sodass der Endbearbeitungsvorgang auf den Gewinden (40A) der Kugelumlaufspindel (40) durchgeführt wird.

## Revendications

1. Assemblage (1000) comprenant:
i. un appareil (100) destiné à réaliser des opérations de finition sur le filetage (40A) d'une vis à billes (40), ledit appareil (100) comprenant:
- un support (42) permettant de maintenir ladite vis à billes (40),
et **caractérisé par**
- un outil de finition remplaçable (10) ayant une partie d'outillage (10A) définissant une section de filetage (10B) complémentaire audit filetage (40A) de ladite vis à billes (40); et
- un mécanisme d'entraînement (44) destiné à déplacer de manière angulaire ledit support (42) afin de faciliter le déplacement angulaire de ladite vis à billes (40) par rapport à ladite section de filetage (10B) dudit outil de finition remplaçable (10) afin de réaliser une opération de finition sur ledit filetage (40A) de ladite vis à billes (40); et
ii. une bande abrasive (20) configurée pour être reçue à l'intérieur dudit outil de finition (10) de telle sorte que, lorsque ladite bande abrasive (20) est reçue à l'intérieur dudit outil de finition (10), elle forme une interface entre ladite section de filetage (10B) dudit outil de finition (10) et le filetage (40A) de ladite vis à billes (40), de telle sorte que le déplacement angulaire de ladite vis à billes (40) par rapport à ladite section de filetage (10B) dudit outil de finition (10) facilite une opération de finition du filetage (40A) de ladite vis à billes (40) via ledit outil de finition (10) et ladite bande abrasive (20).

2. Assemblage (1000) selon la revendication 1, dans lequel ladite bande abrasive (20) est une bande abrasive non-tissée.

3. Assemblage (1000) selon la revendication 1, comprenant un logement (30) configuré pour maintenir ledit outil de finition (10).

4. Assemblage (1000) selon la revendication 3, dans lequel ledit outil de finition (10) et ledit logement (30) sont des composants distincts qui sont montés ensembles.

5. Assemblage (1000) selon la revendication 3, dans lequel ledit logement (30) et ledit outil de finition (10) sont fabriqués comme élément à part entière.

6. Assemblage (1000) selon la revendication 1, dans lequel ledit mécanisme d'entraînement (44) est configuré pour faciliter le déplacement angulaire alterné dans le sens horaire et antihoraire de la vis à billes (40) à l'intérieur de la partie d'outillage (10A), afin de donner à l'outil de finition (10) un mouvement de va-et-vient dans les courses avant et arrière pour effectuer l'opération de finition sur le filetage (40A) de la vis à billes (40).
